# EUROPÄISCHE PATENTSCHRIFT

(11) **EP 3 374 623 B1**
(45) Veröffentlichungstag und Bekanntmachung des Hinweises auf die Patenterteilung: **31.05.2023**
(21) Anmeldenummer: 16784886.0
(22) Anmeldetag: 20.10.2016
(51) Int. Cl.: F02M 35/10, F02M 25/06, F02M 26/21, F02M 26/70

(54) **EINLASSSYSTEM FÜR EINE VERBRENNUNGSKRAFTMASCHINE**
INTAKE SYSTEM FOR AN INTERNAL COMBUSTION ENGINE
SYSTÈME D'ADMISSION POUR UN MOTEUR À COMBUSTION INTERNE

(30) Priorität: 11.11.2015 DE 102015119432
(43) Veröffentlichungstag der Anmeldung: 19.09.2018
(73) Patentinhaber: Pierburg GmbH, 41460 Neuss (DE); Ford-Werke GmbH, 50735 Köln (DE)
(72) Erfinder: VIERKOTTEN, Dirk, 53804 Much (DE); FLENDER, Maximilian, 40477 Düsseldorf (DE); VIGILD, Christian, 52457 Aldenhoven (DE); KUSKE, Andreas, 6243 CM Geulle (NL)
(74) Vertreter: terpatent Patentanwälte ter Smitten Eberlein-Van Hoof Rütten Daubert
(86) Internationale Anmeldenummer: PCT/EP2016/075162
(87) Internationale Veröffentlichungsnummer: WO 2017/080773

(56) Entgegenhaltungen:
- CN-A- 102 900 575
- DE-A1-102012 101 851
- FR-A1- 2 908 473
- US-A1- 2004 144 373
- US-A1- 2007 266 705
- US-A1- 2009 241 886
- US-A1- 2012 199 104
- US-A1- 2014 326 226

## Beschreibung

Die Erfindung betrifft ein Einlasssystem für eine Verbrennungskraftmaschine mit einem Ansaugkanal, einer Mündung eines Abgasrückführkanals in den Ansaugkanal und einem Kurbelgehäuseentlüftungskanal, der in den Ansaugkanal mündet.

Derartige Einlasssysteme werden in Verbrennungskraftmaschinen genutzt, um den in einen Zylinder eines Verbrennungsmotors einzuleitenden Gasstrom bezüglich seiner Zusammensetzung von zurückgeführten Abgasmengen und frisch angesaugten Luftmengen zu steuern und gleichzeitig die Kurbelgehäuseentlüftungsgase, welche kondensat- und ölnebenhaltig sind, zu verbrennen. Je nach Betriebszustand des Verbrennungsmotors sind zur Erreichung minimaler Abgaswerte und maximaler Leistungswerte unterschiedliche Mischungsverhältnisse einzustellen.

Für eine Regelung können entweder zwei getrennte Ventile verwendet werden, wobei dann auch eine Gesamtmengenregelung über die beiden Ventile möglich ist, oder diese Regelventile enthalten zwei Ventilkörper, die über eine gemeinsame Stellvorrichtung betätigt werden, so dass lediglich das Gemisch verändert wird. Diese Ausführung wird insbesondere bei aufgeladenen Motoren, bei denen die Gesamtansaugmenge über die Leistung des Verdichters gesteuert werden kann, genutzt. Um eine entsprechende Regelvorrichtung noch kleiner ausführen zu können, ist es auch bekannt, statt zweier Regelkörper lediglich einen Regelkörper zu verwenden, der mit beiden Kanälen zusammenwirkt. Bei diesen Ausführungen mündet der Abgasrückführkanal üblicherweise unmittelbar stromabwärts der als Drosselventil dienenden Klappe in den Luftansaugkanal. Bei gewünschter Erhöhung der Abgasrückführrate wird dann mit Öffnen des Abgasrückführventils in gleichem Maße die Drosselklappe geschlossen, was neben der Erhöhung des freien Querschnitts des Abgasrückführkanals auch eine Erhöhung des Druckgefälles im Abgasrückführkanal zur Folge hat, wodurch der Anteil des Abgases im Vergleich zur angesaugten Luftmenge zusätzlich erhöht wird.

Eine derartige Anordnung wird beispielsweise in der DE 10 2010 050 256 A1 offenbart, bei der eine Klappe in einer Verzweigung zwischen einem Frischluftzuführungskanal und einem Abgasrückführkanal angeordnet ist. Durch Drehung dieser Klappe wird der Frischluftkanal in dem Maße geöffnet wie der Abgasrückführkanal geschlossen wird und umgekehrt. Zusätzlich wird in dieser Schrift beschrieben, dass das den Frischluftzuführungskanal sowie die Mündung des Abgasrückführkanal bildende Gehäuse eine weitere Öffnung aufweisen kann, über die Kurbelgehäuseentlüftungsgase dem Gasstrom zugeführt werden können. Es wird jedoch nicht beschrieben, wie die Einleitung der Kurbelgehäuseentlüftungsgase erfolgen soll.

Des Weiteren ist aus der DE 10 2008 043 821 A1 ein Ansaugkanal mit einer Drosselklappe bekannt, wobei stromaufwärts der Drosselklappe am Ansaugkanal ein Kurbelgehäuseentlüftungsanschluss ausgebildet ist. Dieser ragt etwa tangential zum Ansaugkanal und zwar an einer Position, dass entstehendes Kondensat aus dem Kurbelgehäuseentlüftungsgas auf ein von der Welle entferntes Ende der Drosselklappe tropft. Entsprechend ist der Entlüftungsanschluss geodätisch oberhalb der Drosselklappe angeordnet. Hierdurch soll ein Eindringen des Kondensats in die Lager der Drosselklappe verhindert werden.

Zusätzlich ist aus der DE 10 2014 200 699 A1 ein Einlasssystem bekannt, bei dem ein Niederdruckabgasrückführventil mit einer Drosselklappe über eine gemeinsame Antriebswelle bewegbar ist. Um zu verhindern, dass Kondensat aus dem Abgas zu einem nachfolgenden Verdichter gelangt und dort zu Schäden führt, ist eine Verbindungsfläche zwischen dem Auslass des Ansaugkanals und dem Einlass des Abgasrückführkanals derart geformt, dass das Kondensat in Richtung zum Einlass des Abgasrückführkanals strömt, um dort durch das heiße Abgas wieder verdampft zu werden. Der Abgaseinlass ist entsprechend geodätisch am tiefsten Ort angeordnet. In diesem Zusammenhang sei darauf hingewiesen, dass sich die Bezeichnungen geodätisch oberhalb oder geodätisch unterhalb immer auf eine Normalstellung eines die Verbrennungskraftmaschine aufweisenden Fahrzeugs in Bezug auf den Erdmittelpunkt beziehen, wobei Normalstellung eine flache Straße mit konstantem Abstand zum Erdmittelpunkt bedeutet, also Berg- oder Talfahrten nicht eingeschlossen sind.

Des Weiteren ist aus der US 2009/0241886 A1 ein Saugrohr bekannt, welches einen Abgasrückführkanal und einen Kurbelgehäuseentlüftungskanal aufweist, die in einen Ansaugkanal münden. Wie die Mündungen des Abgasrückführkanals oder der Kurbelgehäuseentlüftungskanal ausgestaltet sind, wird nicht offenbart.

Zusätzlich wird in der US 2014/0326226 A1 ein Saugrohr offenbart, bei dem der Abgasrückführkanal und der Kurbelgehäuseentlüftungskanal parallel über die Breite des Saugrohres geführt werden. Der Kurbelgehäuseentlüftungskanal mündet über eine kleine Öffnung am Umfang der Einlasskanäle in die einzelnen Saugrohre. Jenseits dieser Öffnungen ist eine separate Tasche ausgebildet, in die die Entlüftungsgase geleitet werden.

Auch ist aus der US 2004/0144373 A1 ein Kurbelgehäuseentlüftungskanal bekannt, der als Einleitstutzen in das Saugrohr ragt.

In diesem Zusammenhang sei darauf hingewiesen, dass sich die Bezeichnungen geodätisch oberhalb oder geodätisch unterhalb immer auf eine Normalstellung eines die Verbrennungskraftmaschine aufweisenden Fahrzeugs in Bezug auf den Erdmittelpunkt beziehen, wobei Normalstellung eine flache Straße mit konstantem Abstand zum Erdmittelpunkt bedeutet, also Berg- oder Talfahrten nicht eingeschlossen sind.

Es sind jedoch keine Lösungen bekannt, bei denen für gekoppelte Drossel- und Niederdruckabgasrückführvorrichtungen eine Einspeisung von Kurbelgehäuseentlüftungsgasen vorgesehen ist. Problematisch bei den bekannten Einleitungen von Kurbelgehäuseentlüftungsgasen ist die Entstehung von Kondensaten, die insbesondere bei einer Einleitung vor einem Verdichter eines Turboladers zu Schäden am Turbolader führen kann. Des Weiteren ist eine Verschmutzung der Welle und der Klappen zu befürchten, welche deren Funktionsfähigkeit einschränkt.

Es ist daher Aufgabe der Erfindung, ein Einlasssystem zur Verfügung zu stellen, bei dem eine Kondensatbildung möglichst reduziert werden soll beziehungsweise durch die Anordnung des Blow-by Anschlusses einerseits vorhandenes Kondensat vom Gasstrom möglichst fernzuhalten und eine Abfuhr des vorhandenen Kondensats zu gewährleisten, so dass die Lebensdauer eines stromabwärtigen Verdichters erhöht wird. Des Weiteren sollen zusätzliche Geräuschentwicklungen ebenso vermieden werden wie eine Verschmutzung der Regelklappen und Antriebswellen, so dass auch deren Funktion über eine lange Lebensdauer sichergestellt wird.

Diese Aufgabe wird durch ein Einlasssystem für eine Verbrennungskraftmaschine mit den Merkmalen des Hauptanspruchs gelöst.

Dadurch, dass der Kurbelgehäuseentlüftungskanal eine Mündung aufweist, die als Einleitstutzen ausgebildet ist, mit dem der Kurbelgehäuseentlüftungskanal in eine seitliche Ausbuchtung des Ansaugkanals ragt, wobei am Ende eines stromaufwärtigen Abschnitts des Ansaugkanals, welcher einen kleineren Umfang aufweist als ein folgender stromabwärtiger Abschnitt des Ansaugkanals ein erster Ventilsitz für einen Regelkörper zum Verschluss des Ansaugkanals ausgebildet ist, wobei eine bezüglich des Ansaugkanals radial innere Wand des Einleitstutzens radial beabstandet zum ersten Ventilsitz angeordnet ist, werden die warmen Kurbelgehäuseentlüftungsgase nicht direkt in den Luftstrom geleitet. Entsprechend findet keine Verwirbelung und eine daraus folgende plötzliche Abkühlung statt, wodurch eine Kondensatbildung deutlich verringert wird. Auch ein direktes Mitreißen vom im Kurbelgehäuseentlüftungsgas enthaltenen Kondensat durch den Luftstrom entfällt. Des Weiteren werden entstehende Geräusche gedämpft, da die Einleitposition nicht direkt vom Gasstrom angeströmt wird, sondern im Windschatten der Strömung angeordnet ist. Auch wird durch die Tasche die Klappe nicht direkt mit den Ölnebeln beaufschlagt. In einer weiteren bevorzugten Ausführungsform ist eine bezüglich des Ansaugkanals radial innere Wand des Einleitstutzens radial beabstandet zum ersten Ventilsitz angeordnet. Durch den radialen Abstand der inneren Wand des Einleitstutzens zum ersten Ventilsitz entsteht ein stehender Luftspalt zwischen dem strömenden Luftstrom aus dem Ansauggehäuse und dem Einleitstutzen, der isolierend wirkt, wodurch eine Abkühlung des Einleitstutzens verhindert wird, was erneut die Kondensatbildung verringert. Des Weiteren erfolgt einerseits ein axialer Anschlag des Regelkörpers am ersten Ventilsitz, der zu einem dichten Verschluss führt und andererseits kann der Regelkörper stromabwärts des Ventilsitzes aus der Hauptströmung herausgedreht werden, so dass bei vollständig geöffnetem Luftkanal der Strömungswiderstand durch die Klappe minimiert wird. Der Einleitstutzen ist insbesondere rohrförmig ausgebildet, wobei rohrförmig nicht als einschränkend bezüglich der Querschnittsform zu verstehen ist, welche sowohl rund als auch oval oder rechteckig sein kann. Dies erleichtert erheblich die Herstellung und Montage und ermöglicht einen gegebenenfalls notwendigen Austausch. In Strömungsrichtung des Ansaugkanals betrachtet ist zusätzlich stromaufwärts der Mündung des Abgasrückführkanals eine als Drehachse dienende Welle angeordnet, auf der der Regelkörper exzentrisch gelagert ist, und die senkrecht zu den Mittelachsen des Ansaugkanals und des Abgasrückführkanals angeordnet ist, wobei in einer ersten Endposition des Regelkörpers der Ansaugkanal stromaufwärts einer Mündung des Abgasrückführkanals zumindest gedrosselt ist, und in einer zweiten Endposition der Abgasrückführkanal verschlossen ist. Entsprechend wird mit nur einer Klappe und einem Aktor die Zusammensetzung des Luftstroms und des Abgasstroms, der dem Verbrennungsmotor zugeführt wird, geregelt, indem der Ansaugkanal immer in dem Maß geschlossen wird wie der Abgasrückführkanal geöffnet wird und umgekehrt.

Vorzugsweise weisen die Mündung des Abgasrückführkanals und die Mündung des Kurbelgehäuseentlüftungskanals einen gemeinsamen Querschnitt senkrecht zur Mittelachse des Ansaugkanals auf. Dies bedeutet, dass die Einleitung der Entlüftungsgase etwa im gleichen Strömungsabschnitt des Ansaugkanals wie die Einleitung des Abgases erfolgt. Dies hat den Vorteil, dass bei Einleitung des Abgases der im Ansaugkanal vorhandene Gasstrom wärmer ist, wodurch ebenfalls die Kondensatbildung verringert wird. Zusätzlich kann trotzdem anfallendes Kondensat in Richtung des warmen Abgaskanals abgeleitet werden, so dass dieses nicht vom Luftstrom zum Verdichter mitgerissen wird.

Daher ist es vorteilhaft, wenn die Mündung des Kurbelgehäuseentlüftungskanals geodätisch oberhalb der Mündung des Abgasrückführkanals angeordnet ist. Entsprechend kann das Kondensat durch die Schwerkraft in Richtung des Abgasrückführkanals gefördert werden und dort entweder verdampfen oder in den Kanal abströmen.

Besonders bevorzugt ist es, wenn der Ansaugkanal eine wannenförmige Ausnehmung aufweist, an deren geodätisch unteren Ende die Mündung des Abgasrückführkanals angeordnet ist. Das Kondensat sowohl aus dem Kurbelgehäuse als auch aus dem Abgas, welches sich beispielsweise an den umgebenden Wänden der Kanäle absetzt oder in der seitlichen Ausbuchtung entsteht, strömt aufgrund der Schwerkraft nach unten und wird in der Wanne gesammelt. Da sich die Öffnung zum Abgasrückführkanal an der tiefsten Stelle der Wanne befindet, strömt das Kondensat in den Abgasrückführkanal und wird dort durch das heiße Abgas verdampft.

Vorteilhafterweise geht die seitliche Ausbuchtung in die wannenförmige Ausnehmung über, so dass das Kondensat aus der Ausbuchtung direkt in die Wanne strömt, ohne zuvor direkt vom Luftstrom angeströmt zu werden.

In einer bevorzugten Ausführungsform des Einlassstutzens ist dessen Ende derart schräg ausgebildet, dass das Ende eine längere und eine gegenüberliegende kürzere Seitenwand aufweist, wobei die längere Seitenwand bezüglich des Ansaugkanals stromabwärts angeordnet ist. So wird zusätzlich verhindert, dass das Kurbelgehäuseentlüftungsgas mit dem darin gelösten Wasser mitgerissen wird. Stattdessen wird die längere Seitenwand so weit nach unten gezogen, dass sie möglichst erst unterhalb des durchströmten Querschnitts des Luft führenden Kanals endet. Zusätzlich bietet ein derartig ausgeführter Auslass den Vorteil einer vergrößerten Austritssfläche, wodurch die Empfindlichkeit gegen Versottung verringert wird.

Vorzugsweise ist am Kurbelgehäuseentlüftungskanal ein Heizelement, insbesondere ein PTC-Heizelement angeordnet. Durch diesen Heizer wird der kondensat- und ölnebelhaltige Gasstrom aus dem Kurbelgehäuse erwärmt, so dass bereits kondensiertes Wasser verdampft wird. Hierdurch gelangt deutlich weniger Wasser im flüssigen Zustand in den Ansaugkanal, so dass der Verdichter weniger belastet wird.

Eine besonders einfache Montage und Herstellung eines derartig ausgebildeten Einlasssystems ergibt sich, wenn sich ein Ansauggehäuse, welches den stromaufwärtigen Abschnitt des Ansaugkanals bildet, in ein Mischgehäuse, welches den stromabwärtigen Abschnitt des Ansaugkanals bildet, erstreckt. Der erste Ventilsitz kann dann am Ende des Ansauggehäuses ausgebildet werden.

In einer hierzu weiterführenden Ausbildung der Erfindung ist die seitliche Ausbuchtung außerhalb des Querschnitts des stromaufwärtigen Abschnitts des Ansaugkanals angeordnet. Entsprechend liegt diese Ausbuchtung im Windschatten des Ansauggehäuses, wodurch ein Mitreißen von anfallendem Kondensat zusätzlich verhindert wird.

Dieser Effekt wird noch verstärkt, indem die kürzere, bezüglich des Ansaugkanals stromaufwärtige Seitenwand des Einleitstutzens stromaufwärts des ersten Ventilsitzes angeordnet ist und die längere stromabwärtige Seitenwand des Einleitstutzens stromabwärts des ersten Ventilsitzes angeordnet ist. Ein Luftstrom, der in das Innere des Einleitstutzens strömt, wird somit nahezu ausgeschlossen. Entsprechend entsteht auch keine direkte Anströmung des Kurbelgehäuseentlüftungsgases durch den Luftstrom, wodurch zusätzliche Kondensatbildung vermieden wird.

Auch ist es vorteilhaft, wenn die wannenförmige Ausnehmung des Ansaugkanals geodätisch unterhalb des ersten Ventilsitzes angeordnet ist, so dass der Regelkörper vollständig aus dem Bereich der Hauptströmung aus dem Ansaugkanal herausgedreht werden kann. In dieser zweiten Endposition ist der Regelkörper vorzugsweise in der wannenförmigen Ausnehmung angeordnet.

Es wird somit ein Einlasssystem geschaffen, mit dem sowohl der Luftmassenstrom im Ansaugkanal als auch der Abgasmassenstrom eines Abgasrückführkreises regelbar ist als auch ein Kurbelgehäuseentlüftungsgas zugeführt werden kann, ohne dass Schäden an nachfolgenden Bauteilen wie einem Verdichter eines Turboladers durch anfallendes Kondensat zu befürchten ist. Auch die bewegbaren Teile, wie Klappen und Wellen werden nur geringfügig zusätzlich belastet, so dass deren Lebensdauer trotz der Zuführung der Kurbelgehäuseentlüftungsgase in den Ansaugkanal nicht nennenswert verändert wird. Hierzu wird einerseits eine Kondensatbildung deutlich reduziert und andererseits das dennoch anfallende Kondensat an Positionen abgeführt, an denen es unschädlich ist oder erneut verdampft wird.

Ein Ausführungsbeispiel eines erfindungsgemäßen Einlasssystems ist in den Figuren dargestellt und wird nachfolgend beschrieben.

Die Figur 1 zeigt eine Seitenansicht eines erfindungsgemäßen Einlasssystems in geschnittener Darstellung.

Die Figur 2 zeigt eine Kopfansicht des erfindungsgemäßen Einlasssystems gemäß der Figur 1 mit in der linken Hälfte weggeschnittenem Mischgehäuse.

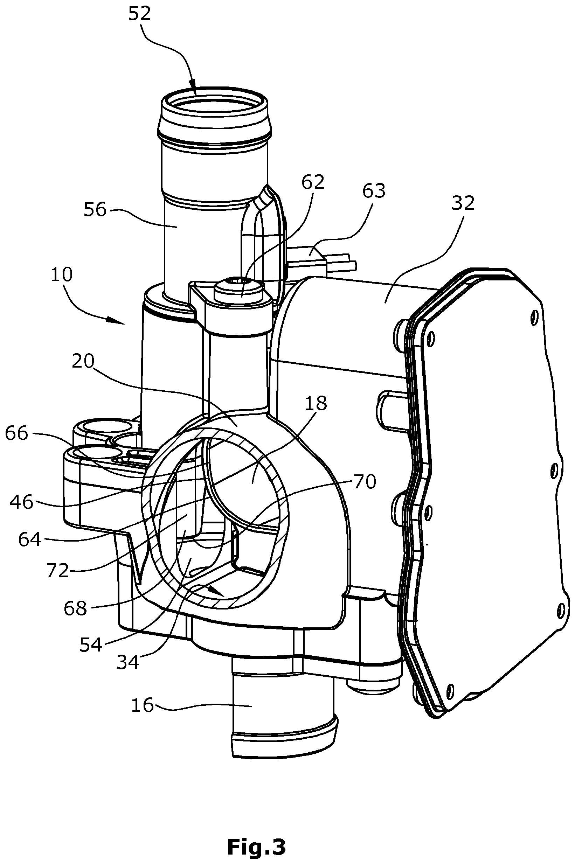

Die Figur 3 zeigt eine perspektivische Ansicht des erfindungsgemäßen Einlasssystems gemäß der Figuren 1 und 2.

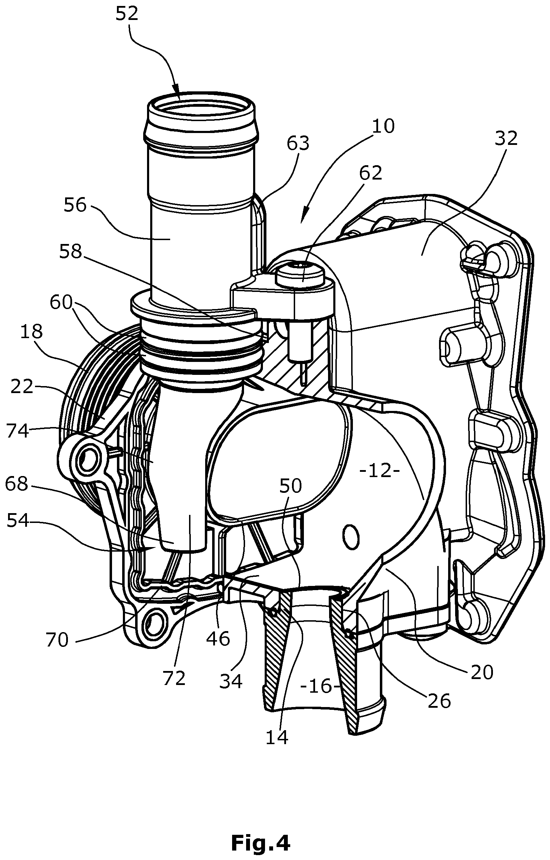

Die Figur 4 zeigt eine weitere perspektivische Ansicht des erfindungsgemäßen Einlasssystems gemäß der Figuren 1 bis 3 mit in der linken Hälfte weggeschnittenem Mischgehäuse.

Das erfindungsgemäße Einlasssystem besteht aus einem Gehäuse 10, welches einen Ansaugkanal 12 begrenzt und an dem eine Mündung 14 eines Abgasrückführkanals 16 ausgebildet ist. Der Ansaugkanal 12 verläuft im Wesentlichen in gerader Richtung zu einem nicht dargestellten axialen Einlass eines Verdichtergehäuses eines Turboladers, während der Abgasrückführkanal 16 etwa senkrecht zum Ansaugkanal 12 in diesen mündet.

Das Gehäuse 10 besteht aus einem ersten im Wesentlichen rohrförmig ausgebildeten Ansauggehäuse 18, dessen stromabwärtiges Ende schräg ausgebildet ist und einen Winkel α von etwa 80° zu einer Mittelachse des Ansaugkanals 12 einschließt. Dieses Ansauggehäuse 18 ragt mit diesem stromabwärtigen Ende in ein Mischgehäuse 20, beziehungsweise wird in das Mischgehäuse 20 bis zur Anlage eines Flansches 22 eingeschoben, über den das Ansauggehäuse 18 mittels Schrauben 24 am Mischgehäuse 20 befestigt ist.

Die Mündung 14 des Abgasrückführkanals 16 ragt geodätisch von unten in eine Öffnung 26 des Mischgehäuses 20 und ist als separates Gehäuseteil ausgebildet. Das Mischgehäuse 20 bildet eine Verlängerung des Ansaugkanals 12, der wiederum im Folgenden beispielsweise in den axialen Einlass des Verdichtergehäuses mündet. Im Mischgehäuse 20 ist eine Welle 28 um eine Drehachse 30 drehbar gelagert, die über einen Aktor 32 betätigt werden kann. Die Drehachse 30 dieser Welle 28 ist senkrecht zu den Mittelachsen des Ansaugkanals 12 und des Abgasrückführkanals 16 angeordnet und befindet sich zwischen der Mündung 14 des Abgasrückführkanals 16 am bezüglich des Luftstroms stromaufwärtigen Ende des Abgasrückführkanals 16 und dem axialen Ende des Ansauggehäuses 18 an dessen zum Abgasrückführkanal 16 gewandten Seite. Der Durchströmungsquerschnitt des Ansauggehäuses 16 ist kleiner als der des Mischgehäuses 20, wobei das Ansauggehäuse 18 derart am Mischgehäuse 20 befestigt ist und in dieses hineinragt, dass eine stromabwärtig zur Mündung 14 des Abgasrückführkanals 16 ausgebildete wannenförmige Ausnehmung 34 im Strömungsschatten des Luftstroms aus dem Ansauggehäuse 18 angeordnet ist, in der die Welle 28 das Mischgehäuse 20 durchdringt.

An dieser exzentrisch im Ansaugkanal 12 angeordneten Welle 28 ist ein Regelkörper 36 befestigt, der aus einer Klappe 38 sowie einem über ein Koppelglied 40 an der ersten Klappe 38 befestigten Schließglied 42 besteht. Die Klappe 38 erstreckt sich von der Welle 28 aus in das Innere des Mischgehäuses 20 und beherrscht den Durchströmungsquerschnitt des Ansaugkanals 12. Hierzu liegt die Klappe 38 in einer ersten Endposition mit ihrer ersten Oberfläche 44 gegen das axiale Ende des Ansauggehäuses 18 an, das als erster Ventilsitz 46 dient.

In der Klappe 38 ist eine Bohrung ausgebildet, in der das Koppelglied 40 an der Klappe 38 befestigt ist. Dieses Koppelglied 40 erstreckt sich senkrecht von einer zur ersten Oberfläche 44 gegenüberliegenden zweiten Oberfläche 48 der Klappe 38 und durchdringt mit seinem gegenüberliegenden Ende das Schließglied 42, welches wiederum an diesem Ende des Koppelgliedes 40 befestigt ist. Diese Befestigung des Schließgliedes 42 führt dazu, dass bei Drehung der Welle 28 in eine zweite Endposition, in der das Schließglied 42 auf einem am Ende der Mündung 14 des Abgasrückführkanals 16 ausgebildeten zweiten Ventilsitz 50 aufliegt, ein Verschluss des Abgasrückführkanals 16 erfolgt.

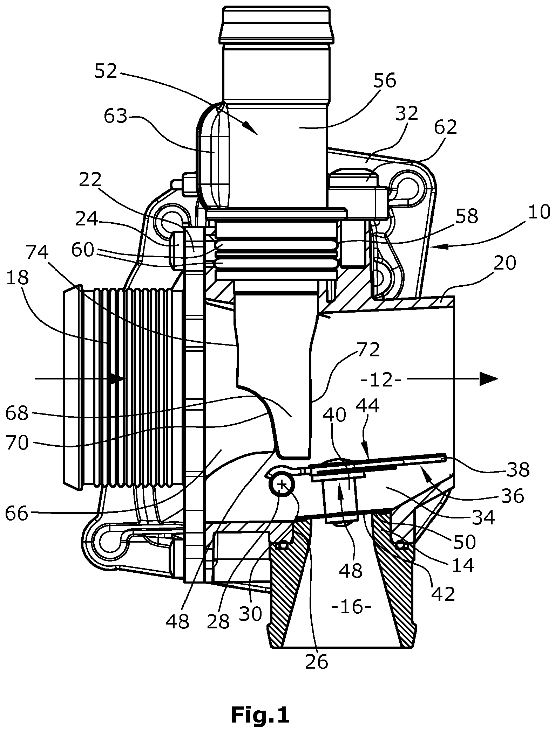

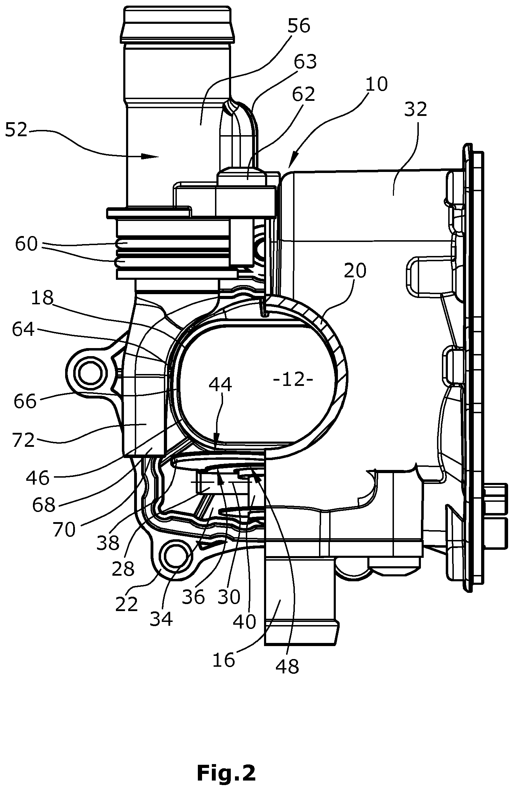

Erfindungsgemäß ragt in den Ansaugkanal 12 zusätzlich ein Kurbelgehäuseentlüftungskanal 52 und zwar von oben in eine seitliche Ausbuchtung 54 des Ansaugkanals 12, welche mit der wannenförmigen Ausnehmung 34 und der Mündung 14 des Abgasrückführkanals 16 einen gemeinsamen Querschnitt aufweist, der senkrecht zur Mittelachse des Ansaugkanals 12 angeordnet ist oder anders ausgedrückt befindet sich diese Ausbuchtung 54 im gleichen Lauflängenabschnitt des Ansaugkanals 12 wie die Ausnehmung 34, der Regelkörper 36 und die Mündung 14 des Abgasrückführkanals 16. Der Kurbelgehäuseentlüftungskanal 52 ist zumindest teilweise in einem rohrförmigen Einleitstutzen 56 ausgebildet, der durch eine entsprechende Öffnung 58 des Mischgehäuses unter Zwischenlage zweier O-Ringe 60 eingesteckt wird und anschließend über eine Schraube 62 am Mischgehäuse 20 befestigt wird. Oberhalb dieser Befestigung ist am Einleitstutzen ein PTC-Heizelement 63 angeordnet. Eine bezüglich des Ansaugkanals 12 radial innere Wand 64 des Einleitstutzens 56 ist, wie in Figur 2 zu erkennen ist, derart ausgeformt, dass diese bei Draufsicht auf das Ende des Ansauggehäuses 18 vollständig außerhalb von dessen Durchströmungsquerschnitt angeordnet ist und einen in weiten Teilen gleichmäßigen Abstand zur radial begrenzenden Wand 66 des Ansaugkanalabschnitts im Ansauggehäuse 18 aufweist. Eine Mündung 68 des Kurbelgehäuseentlüftungskanals 52 weist nach unten und ragt in den geodätisch unteren Bereich der Ausbuchtung 54, welche in diesem Bereich in die wannenförmige Ausnehmung 34 übergeht. Ein Ende 70 des Einleitstutzens 56 weist eine dreidimensionale Form auf, wobei eine stromabwärtige Seitenwand 72 des Einleitstutzens 56 länger ausgebildet ist als eine kürzere, stromaufwärtige Seitenwand 74,wie insbesondere aus Figur 1 hervorgeht. Das Ende 70 des Einleitstutzens 56 weist eine die beiden Seitenwände 72, 74 verbindende Bogenform auf. Die längere Seitenwand 72 ragt dabei geodätisch bis unterhalb der Unterkante des ersten Ventilsitzes 46 und ist stromabwärtig zur Unterkante des Ventilsitzes 46 angeordnet, während die stromaufwärtige kürzere Seitenwand 74 stromaufwärtig zum Ventilsitz 46 angeordnet ist und oberhalb der Unterkante des Ventilsitzes 46 endet.

Gelangt nun während des Betriebs Kurbelgehäuseentlüftungsgas, welches Ölnebel, Kondensate und Wasserdampf enthält, über den Einleitstutzen 56 in das Einlasssystem, so entsteht kein unmittelbarer Kontakt zum gegebenenfalls kalten Luftstrom, da die Einleitung sowohl des flüssigen Kondensats als auch des Gases vollständig im Windschatten des Ansauggehäuses 18 erfolgt. Entsprechend wird das Gas nicht im Luftstrom verwirbelt und aufgrund des Kontaktes mit dem Luftstrom plötzlich abgekühlt, so dass auch keine zusätzliche Kondensatbildung entsteht. Auch wird das Gas aus dem Einleitstutzen 56 nicht direkt in Richtung des Verdichters mitgerissen. Stattdessen tropft das vorhandene Kondensat vom Ende 70 des Einleitstutzens 56 in die Ausbuchtung und strömt von dort aufgrund der Schwerkraft in die wannenförmige Ausnehmung 34 und damit direkt zum zweiten Ventilsitz 50. Sobald dieser geöffnet ist, tropft das Kondensat in den geodätisch unterhalb liegenden Abgasrückführkanal 16, wo das Kondensat entweder durch die Wärme des Abgasstroms wieder verdampft wird und somit im dampfförmigen Zustand mit dem warmen Abgasstrom in den Luftstrom geführt wird oder durch den Abgasrückführkanal über die dem Partikelfilter nachgeschalteten Teile der Abgasanlage zum Abgasauslass strömt. Die Einleitung des Kurbelgehäuseentlüftungsgases erfolgt aufgrund des Druckgefälles zwischen dem Kurbelgehäuse und dem Verdichter. Das in die Ausbuchtung gelangende Gas wird allmählich und langsam aufgrund der natürlichen Gasbewegung in den Luftstrom eingeführt, so dass dieser bezüglich der vorhandenen Feuchtigkeit üblicherweise nicht gesättigt ist und diese geringen Mengen Wasserdampfs aufnehmen kann, ohne dass das Wasser auskondensiert.

Es wird somit ein Einlasssystem geschaffen, mit dem sowohl der Luftmassenstrom im Ansaugkanal als auch der Abgasmassenstrom eines Abgasrückführkreises regelbar ist als auch ein Kurbelgehäuseentlüftungsgas zugeführt werden kann, wobei Schäden an nachfolgenden Bauteilen wie einem Verdichter eines Turboladers durch anfallendes Kondensat reduziert werden, da dieses zumindest teilweise verdampft oder abgeführt wird und das Entstehen neuen Kondensats weitestgehend ebenfalls reduziert wird. Auch die bewegbaren Teile, wie Klappen und Wellen werden nur geringfügig belastet, da sie nicht direkt den Ölnebeln und dem Wasser ausgesetzt werden. Zusätzlich werden vorhandene Geräuschemissionen verringert, da kein direktes Einströmen des Kurbelgehäuseentlüftungsgases in den Luftstrom erfolgt, was sonst zu Strömungsgeräuschen durch Turbulenzen führen könnte.

Es sollte deutlich sein, dass der Schutzbereich der vorliegenden Anmeldung nicht auf das beschriebene Ausführungsbeispiel beschränkt ist. Es sind verschiedene konstruktive Versionen der Einleitung des Kurbelgehäusegases denkbar. Auch kann dieses in einem Bereich eingespeist werden, in dem kein Abgasrückführventil angeordnet ist, sondern der Abgasrückführkanal frei zugänglich ist. Auch könnte ein Abgasventil separat zur Drosselklappe ausgebildet und betätigt werden. Zusätzlich sind verschiedene konstruktive Versionen zur Ausführung und Positionierung des Kurbelgehäuseentlüftungskanals denkbar, wobei es insbesondere wichtig ist, diesen in wenig turbulenten Strömungsbereichen anzuordnen und eine direkte Anströmung zu verhindern.

## Patentansprüche

1. Einlasssystem für eine Verbrennungskraftmaschine mit
einem Ansaugkanal (12),
einer Mündung (14) eines Abgasrückführkanals (16) in den Ansaugkanal (12),
und einem Kurbelgehäuseentlüftungskanal (52), der in den Ansaugkanal (12) mündet,
**dadurch gekennzeichnet, dass**
der Kurbelgehäuseentlüftungskanal (52) eine Mündung (68) aufweist, die als Einleitstutzen (56) ausgebildet ist, mit dem der Kurbelgehäuseentlüftungskanal (52) in eine seitliche Ausbuchtung (54) des Ansaugkanals (12) ragt, wobei am Ende eines stromaufwärtigen Abschnitts des Ansaugkanals (12), welcher einen kleineren Umfang aufweist als ein folgender stromabwärtiger Abschnitt des Ansaugkanals (12) ein erster Ventilsitz (46) für einen Regelkörper (36) zum Verschluss des Ansaugkanals (12) ausgebildet ist, wobei eine bezüglich des Ansaugkanals (12) radial innere Wand (64) des Einleitstutzens (56) radial beabstandet zum ersten Ventilsitz (46) angeordnet ist, wobei in Strömungsrichtung des Ansaugkanals (12) betrachtet stromaufwärts der Mündung (14) des Abgasrückführkanals (16) eine als Drehachse (30) dienende Welle (28) angeordnet ist, auf der der Regelkörper (36) exzentrisch gelagert ist, und die senkrecht zu den Mittelachsen des Ansaugkanals (12) und des Abgasrückführkanals (16) angeordnet ist, wobei in einer ersten Endposition des Regelkörpers (36) der Ansaugkanal (12) stromaufwärts einer Mündung (14) des Abgasrückführkanals (16) zumindest gedrosselt ist, und in einer zweiten Endposition der Abgasrückführkanal (16) verschlossen ist.

2. Einlasssystem für eine Verbrennungskraftmaschine nach Anspruch 1,
**dadurch gekennzeichnet, dass**
die Mündung (14) des Abgasrückführkanals (16) und eine Mündung (68) des Kurbelgehäuseentlüftungskanals (52) einen gemeinsamen Querschnitt senkrecht zur Mittelachse des Ansaugkanals (12) aufweisen, so dass sich die Mündung (14) des Abgasrückführkanals (16) und die Mündung (68) des Kurbelgehäuseentlüftungskanals (52) im gleichen Strömungsabschnitt des Ansaugkanals (12) befinden.

3. Einlasssystem für eine Verbrennungskraftmaschine nach einem der Ansprüche 1 oder 2,
**dadurch gekennzeichnet, dass**
die Mündung (68) des Kurbelgehäuseentlüftungskanals (52) geodätisch oberhalb der Mündung (14) des Abgasrückführkanals (16) angeordnet ist.

4. Einlasssystem für eine Verbrennungskraftmaschine nach einem der vorhergehenden Ansprüche,
**dadurch gekennzeichnet, dass**
der Ansaugkanal (12) eine wannenförmige Ausnehmung (34) aufweist, an deren geodätisch unteren Ende die Mündung (14) des Abgasrückführkanals (16) angeordnet ist.

5. Einlasssystem für eine Verbrennungskraftmaschine nach Anspruch 4,
**dadurch gekennzeichnet, dass**
die seitliche Ausbuchtung (54) in die wannenförmige Ausnehmung (34) übergeht.

6. Einlasssystem für eine Verbrennungskraftmaschine nach einem der vorhergehenden Ansprüche,
**dadurch gekennzeichnet, dass**
ein Ende (70) des Einleitstutzens (56) derart schräg ausgebildet ist, dass das Ende (70) eine längere Seitenwand (72) und eine gegenüberliegende kürzere Seitenwand (74) aufweist, wobei die längere Seitenwand (72) bezüglich des Ansaugkanals (12) stromabwärts angeordnet ist.

7. Einlasssystem für eine Verbrennungskraftmaschine nach einem der vorhergehenden Ansprüche,
**dadurch gekennzeichnet, dass**
am Kurbelgehäuseentlüftungskanal (52) ein Heizelement (63) angeordnet ist.

8. Einlasssystem für eine Verbrennungskraftmaschine nach einem der vorhergehenden Ansprüche,
**dadurch gekennzeichnet, dass**
sich ein Ansauggehäuse (18), welches den stromaufwärtigen Abschnitt des Ansaugkanals (12) bildet, in ein Mischgehäuse (20), welches den stromabwärtigen Abschnitt des Ansaugkanals (12) bildet, erstreckt.

9. Einlasssystem für eine Verbrennungskraftmaschine nach einem der vorhergehenden Ansprüche,
**dadurch gekennzeichnet, dass**
die seitliche Ausbuchtung (54) außerhalb des Querschnitts des stromaufwärtigen Abschnitts des Ansaugkanals (12) angeordnet ist.

10. Einlasssystem für eine Verbrennungskraftmaschine nach Anspruch 6,
**dadurch gekennzeichnet, dass**
die kürzere, bezüglich des Ansaugkanals (12) stromaufwärtige Seitenwand (74) des Einleitstutzens (56) stromaufwärts des ersten Ventilsitzes (46) angeordnet ist und die längere stromabwärtige Seitenwand (72) des Einleitstutzens (56) stromabwärts des ersten Ventilsitzes (46) angeordnet ist,

11. Einlasssystem für eine Verbrennungskraftmaschine nach einem der Ansprüche 4 bis 10,
**dadurch gekennzeichnet, dass**
die wannenförmige Ausnehmung (34) des Ansaugkanals (12) geodätisch unterhalb des ersten Ventilsitzes (46) angeordnet ist.

12. Einlasssystem für eine Verbrennungskraftmaschine nach einem der Ansprüche 4 bis 11,
**dadurch gekennzeichnet, dass**
der Regelkörper (36) in seiner zweiten Endposition in der wannenförmigen Ausnehmung (34) angeordnet ist.

## Claims

1. Intake system for an internal combustion engine comprising
an intake channel (12),
an opening (14) of an exhaust gas recirculation channel (16) into the intake channel (12)
and a crankcase ventilation channel (52) which opens into the intake channel (12),
**characterized in that**
the crankcase ventilation channel (52) comprises an opening (68) configured as an intake port (56) with which the crankcase ventilation channel (52) projects into a lateral bulge (54) of the intake channel (12), wherein at the end of an upstream portion of the intake channel (12), which comprises a smaller circumference than a following downstream portion of the intake channel (12), a first valve seat (46) for a control body (36) for closing the intake channel (12) is configured, wherein a radially inner wall (64) of the inlet nozzle (56), with respect to the intake channel (12), is arranged at a radial distance from the first valve seat (46), wherein, viewed in the direction of flow of the intake channel (12), upstream of the opening (14) of the exhaust gas recirculation channel (16) a shaft (28) serving as an axis of rotation (30) is arranged, on which the control body (36) is eccentrically mounted, and which is arranged perpendicular to the center axes of the intake channel (12) and of the exhaust gas recirculation channel (16) wherein in a first end position of the control body (36) the intake channel (12) is at least throttled upstream of an opening (14) of the exhaust gas recirculation channel (16), and in a second end position the exhaust gas recirculation channel (16) is closed.

2. Intake system for an internal combustion engine according to claim 1,
**characterized in that**
the opening (14) of the exhaust gas recirculation channel (16) and an opening (68) of the crankcase ventilation channel (52) comprise a common cross-section perpendicular to the center axis of the intake channel (12), so that the opening (14) of the exhaust gas recirculation channel (16) and the opening (68) of the crankcase ventilation channel (52) are located in the same flow section of the intake channel (12).

3. Intake system for an internal combustion engine according to one of claims 1 or 2,
**characterized in that**
the opening (68) of the crankcase ventilation channel (52) is arranged geodetically above the opening (14) of the exhaust gas recirculation channel (16).

4. Intake system for an internal combustion engine according to one of the preceding claims,
**characterized in that**
the intake channel (12) comprises a trough-shaped recess (34), at the geodetical lower end of which the opening (14) of the exhaust gas recirculation channel (16) is arranged.

5. Intake system for an internal combustion engine according to claim 4,
**characterized in that**
the lateral bulge (54) merges into the trough-shaped recess (34).

6. Intake system for an internal combustion engine according to one of the preceding claims,
**characterized in that**
an end (70) of the intake port (56) is configured at an angle such that the end (70) comprises a longer side wall (72) and an opposite shorter side wall (74), wherein the longer side wall (72) is arranged downstream with respect to the intake channel (12).

7. Intake system for an internal combustion engine according to one of the preceding claims,
**characterized in that**
a heating element (63) is arranged at the crankcase ventilation channel (52).

8. Intake system for an internal combustion engine according to one of the preceding claims,
**characterized in that**
an intake housing (18) defining the upstream portion of the intake channel (12) extends into a mixing housing (20) defining the downstream portion of the intake channel (12).

9. Intake system for an internal combustion engine according to one of the preceding claims,
**characterized in that**
the lateral bulge (54) is arranged outside the cross-section of the upstream portion of the intake channel (12).

10. Intake system for an internal combustion engine according to claim 6,
**characterized in that**
the shorter upstream sidewall (74) of the intake port (56) with respect to the intake channel (12) is arranged upstream of the first valve seat (46) and the longer downstream sidewall (72) of the intake port (56) is arranged downstream of the first valve seat (46).

11. Intake system for an internal combustion engine according to any one of claims 4 to 10,
**characterized in that**
the trough-shaped recess (34) of the intake channel (12) is arranged geodetically below the first valve seat (46).

12. Intake system for an internal combustion engine according to any one of claims 4 to 11,
**characterized in that**
the control body (36) is arranged in its second end position in the trough-shaped recess (34).

## Revendications

1. Système d'admission pour un moteur à combustion interne avec
un canal d'admission (12),
une embouchure (14) d'un canal de recirculation des gaz d'échappement (16) dans le canal d'admission (12),
et un canal de ventilation de boîtier de vilebrequin (52) qui débouche dans le canal d'admission (12),
**caractérisé en ce que**
le canal de ventilation de boîtier de vilebrequin (52) comprend une embouchure (68) qui est conçue comme une tubulure d'introduction (56) avec laquelle le canal de ventilation de boîtier de vilebrequin (52) fait saillie dans un renflement latéral (54) du canal d'admission (12), l'extrémité d'une section amont du canal d'admission (12), qui comprend une circonférence plus petite qu'une section aval suivante du canal d'admission (12), un premier siège de vanne (46) est formé pour un corps de régulation (36) pour la fermeture du canal d'admission (12), une paroi (64) radialement intérieure par rapport au canal d'admission (12) de la tubulure d'introduction (56) étant disposée à une distance radiale du premier siège de vanne (46), un arbre (28) servant d'axe de rotation (30) étant disposé, vu dans le sens d'écoulement du canal d'admission (12), en amont de l'embouchure (14) du canal de recirculation des gaz d'échappement (16), arbre sur lequel le corps de régulation (36) est monté de manière excentrée et qui est disposé perpendiculairement aux axes médians du canal d'admission (12) et du canal de recirculation des gaz d'échappement (16), dans lequel, dans une première position extrême du corps de régulation (36), le canal d'admission (12) est au moins étranglé en amont d'une embouchure (14) du canal de recirculation des gaz d'échappement (16), et dans une deuxième position extrême, le canal de recirculation des gaz d'échappement (16) est fermé.

2. Système d'admission pour un moteur à combustion interne selon la revendication 1,
**caractérisé en ce que**
l'embouchure (14) du conduit de recirculation des gaz d'échappement (16) et une embouchure (68) du conduit de ventilation de boitier de (52) comprennent une section commune perpendiculaire à l'axe central du conduit d'admission (12), de sorte que l'embouchure (14) du conduit de recirculation des gaz d'échappement (16) et l'embouchure (68) du conduit de ventilation de carter (52) se trouvent dans la même section d'écoulement du conduit d'admission (12).

3. Système d'admission pour un moteur à combustion interne selon l'une des revendications 1 ou 2,
**caractérisé en ce que**
l'embouchure (68) du canal de ventilation de boîtier de vilebrequin (52) est disposée géodésiquement au-dessus de l'embouchure (14) du conduit de recirculation des gaz d'échappement (16).

4. Système d'admission pour un moteur à combustion interne selon l'une quelconque des revendications précédentes,
**caractérisé en ce que**
le canal d'admission (12) comprend un évidement (34) en forme de cuvette, à l'extrémité géodésiquement inférieure duquel est disposée l'embouchure (14) du canal de recirculation des gaz d'échappement (16).

5. Système d'admission pour un moteur à combustion interne selon la revendication 4,
**caractérisé en ce que**
le renflement latéral (54) se confond avec l'évidement en forme de cuvette (34).

6. Système d'admission pour un moteur à combustion interne selon l'une quelconque des revendications précédentes,
**caractérisé en ce que**
une extrémité (70) de la tubulure d'introduction (56) est inclinée de telle sorte que l'extrémité (70) comprend une paroi latérale plus longue (72) et une paroi latérale opposée plus courte (74), la paroi latérale plus longue (72) étant située en aval par rapport au canal d'admission (12).

7. Système d'admission pour un moteur à combustion interne selon l'une quelconque des revendications précédentes,
**caractérisé en ce que**
un élément chauffant (63) est disposé sur le canal de ventilation de boîtier de vilebrequin (52).

8. Système d'admission pour un moteur à combustion interne selon l'une des revendications précédentes,
**caractérisé en ce que**
un boîtier d'admission (18), qui forme la partie amont du canal d'admission (12), s'étend dans un boîtier de mélange (20), qui forme la partie aval du canal d'admission (12).

9. Système d'admission pour un moteur à combustion interne selon l'une quelconque des revendications précédentes,
**caractérisé en ce que**
le renflement latéral (54) est situé à l'extérieur de la section transversale de la partie amont du canal d'admission (12).

10. Système d'admission pour un moteur à combustion interne selon la revendication 6,
**caractérisé en ce que**
la paroi latérale amont la plus courte (74) de la tubulure d'admission (56) par rapport au canal d'admission (12) est située en amont du premier siège de vanne (46) et la paroi latérale aval la plus longue (72) de la tubulure d'admission (56) est située en aval du premier siège de vanne (46).

11. Système d'admission pour un moteur à combustion interne selon l'une quelconque des revendications 4 à 10,
**caractérisé en ce que**
l'évidement en forme de cuvette (34) du canal d'admission (12) est disposé géodésiquement en dessous du premier siège de vanne (46).

12. Système d'admission pour un moteur à combustion interne selon l'une quelconque des revendications 4 à 11,
**caractérisé en ce que**
le corps de régulation (36) est disposé dans sa deuxième position d'extrémité dans l'évidement en forme de cuvette (34).
